(19) Europäisches Patentamt / European Patent Office / Office européen des brevets

(11) EP 1 104 242 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**06.07.2016 Patentblatt 2016/27**

(45) Hinweis auf die Patenterteilung:
**10.12.2003 Patentblatt 2003/50**

(21) Anmeldenummer: **99941558.1**

(22) Anmeldetag: **10.08.1999**

(51) Int Cl.:
***A01N 57/20*** *(2006.01)* *A01N 57/20* *(2006.01)*
*A01N 57/14* *(2006.01)* *A01N 47/36* *(2006.01)*
*A01N 47/16* *(2006.01)* *A01N 47/12* *(2006.01)*
*A01N 43/824* *(2006.01)* *A01N 43/80* *(2006.01)*
*A01N 43/76* *(2006.01)* *A01N 43/653* *(2006.01)*
*A01N 43/50* *(2006.01)* *A01N 43/42* *(2006.01)*
*A01N 43/18* *(2006.01)* *A01N 43/12* *(2006.01)*
*A01N 39/04* *(2006.01)* *A01N 37/22* *(2006.01)*
*A01N 33/18* *(2006.01)*

(86) Internationale Anmeldenummer:
**PCT/EP1999/005795**

(87) Internationale Veröffentlichungsnummer:
**WO 2000/008935 (24.02.2000 Gazette 2000/08)**

(54) **HERBIZIDE MITTEL FÜR TOLERANTE ODER RESISTENTE REISKULTUREN**
HERBICIDAL AGENTS FOR TOLERANT OR RESISTANT RICE CROPS
HERBICIDE POUR CULTURE DE RIZ TOLERANTES OU RESISTANTES

(84) Benannte Vertragsstaaten:
**AT BE CH CY DE DK ES FI FR GB GR IE IT LI LU MC NL PT SE**

(30) Priorität: **13.08.1998 DE 19836684**

(43) Veröffentlichungstag der Anmeldung:
**06.06.2001 Patentblatt 2001/23**

(73) Patentinhaber: **Bayer CropScience AG**
**40789 Monheim am Rhein (DE)**

(72) Erfinder:
- **HACKER, Erwin**
  **D-65239 Hochheim (DE)**
- **BIERINGER, Hermann**
  **D-65817 Eppstein (DE)**
- **WILLMS, Lothar**
  **D-65719 Hofheim (DE)**

(74) Vertreter: **von Renesse, Dorothea**
**König-Szynka-Tilmann-von Renesse**
**Patentanwälte Partnerschaft mbB**
**Postfach 11 09 46**
**40509 Düsseldorf (DE)**

(56) Entgegenhaltungen:
**EP-A- 0 252 237 WO-A-92/08353**
**WO-A-95/05082 WO-A-97/20807**
**WO-A-97/36488 WO-A-99/13723**
**WO-A-99/52367 FR-A- 2 769 176**

- **CHEMICAL ABSTRACTS, vol. 128, no. 7, 16. Februar 1998 (1998-02-16) Columbus, Ohio, US; abstract no. 71921, SANKULA, SUJATHA ET AL: "Glufosinate-resistant, BAR-transformed rice (Oryza sativa) and red rice (Oryza sativa) response to glufosinate alone and in mixtures" XP002126150 & WEED TECHNOL. (1997), 11(4), 662-666 , 1997,**
- **DATABASE CROPU [Online] Derwent International 1997 MITCHELL H R ET AL: "Carfentrazone -ethyl for broadleaf weed control in rice." retrieved from STN Database accession no. 1997-90914 XP002126151 & PROC.SOUTH.WEED SCI.SOC. (50 MEET., 11, 1997) CODEN: SWSPBE, FMC**
- **DATABASE CROPU [Online] Derwent International 1991 SMITH R J JR ET AL: "Weed Control Technology in U.S. Rice." retrieved from STN Database accession no. 1991-82186 XP002126152 & . PEST MANAGE.RICE (314-27, 1990) 28 REF. (AJU) CODEN:,**

- DATABASE CROPU [Online] Derwent International 1995 SPIRIDONOV Y Y ET AL: "Herbicide preparations of a new generation in weed control. 2nd Comm. Efficacy of Command in control of weeds in cultivated soybean and rice under conditions of the Far-Eastern regions of Russia." retrieved from STN Database accession no. 1995-83003 XP002126153 & AGROKHIMIYA (1995, NO. 2, 95-99) 1 FIG. 6 TAB. 3 REF. CODEN: AGKYAU, All-Russian-Sci.Res.Inst.Phytopathol.Moscow;Far-Eastern- Sci.Res.Inst.Plant-Prot.
- DATABASE CROPU [Online] Derwent International 1996 HESS M ET AL: "HOE 095404: a new herbicide for broadleaf weed and sedge control in rice." retrieved from STN Database accession no. 1996-80951 XP002126154 & PROC.BR.CROP PROT.CONF.WEEDS (2, 763-68, 1995) 6 TAB. 5 REF. CODEN: PBCWDF, Hoechst-Schering-AgrEvo
- DATABASE CROPU [Online] Derwent International 1997 HO N K: "Current status of rice herbicide use in the Tropics." retrieved from STN Database accession no. 1997-86486 XP002126155 & JIRCAS INT.SYMP.SER. (4, 77-86, 1996) 2 FIG. 3 TAB. 37 REF.,
- DATABASE CROPU [Online] Derwent International 1991 REES R ET AL: "A Novel Use for Benfuresate as a Paddy Rice Herbicide." retrieved from STN Database accession no. 1991-82194 XP002126156 & . PEST MANAGE.RICE (402-20, 1990) 11 TAB. 3 REF. (AJU) CODEN:, Schering
- C TOMLIN (ED): "The Pesticide Manual, Tenth Edition" , FARNHAM, GB XP002099499 ISBN: 0-948404-79-5 Seite 1335 -Seite 1341
- DATABASE CROPU [Online] Derwent International 1996 SANKULA S ET AL: "Influence of Ignite applications and tankmixes on Ignite resistant rice and red rice." retrieved from STN Database accession no. 1996-81455 XP002126157 & PROC.SOUTH.WEED SCI.SOC. (48 MEET., 3, 1995) CODEN: SWSPBE, Univ.Louisiana-State

## Beschreibung

Die Erfindung liegt auf dem Gebiet der Pflanzenschutzmittel, die gegen Schadpflanzen in toleranten oder resistenten Kulturen von Reis eingesetzt werden können und als Herbizidwirkstoffe eine Kombination von zwei Herbiziden enthalten.

Mit der Einführung von toleranten oder resistenten Reissorten und -linien, insbesondere von transgenen Reissorten und -linien, wird das herkömmliche Unkrautbekämpfungssystem um neue, per se in herkömmlichen Reissorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit bestimmten Herbiziden (B) in besonders günstiger Weise zusammenwirken, wenn sie in den Reiskulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Reiskulturen, dadurch gekennzeichnet, daß die jeweilige Herbizid-Kombination aus einem synergistisch wirksamen Gehalt an

(A) dem breitwirksamen Herbizid

(A1) Glufosinate-ammonium

und
(B) einem Herbizid aus der Gruppe der Verbindungen, welche aus

(B1) selektiv in Reis gegen monokotyle und dikotyle Schadpflanzen wirksamen Herbiziden mit Blattwirkung und Bodenwirkung (Residualwirkung) aus der Gruppe Molinate, Clomazone, Anilofos, Oxadiazon, und
(B2) selektiv in Reis gegen dikotyle Schadpflanzen und/oder Seggen wirksamen Herbiziden aus der Grupp Metsulfuron-methyl, Pyrazosulfuron-ethyl, Carfentrazone-ethyl Benfuresate, und
(B3) selektiv in Reis gegen monokotyle Schadpflanzen wirksamen Herbiziden mit Blattwirkung aus der Gruppe Fenoxapron-ethyl, oder
(B4) selektiv in Reis gegen monokotyle Schadpflanzen wirksamen Herbiziden mit Blatt- und Bodenwirkung aus der Gruppe Clefoxidim besteht,

besthet und die Reiskulturen gegenüber den in der Kombination enthaltenen Herbiziden (A) und (B), gegebenenfalls in Gegenwart von Safenern, tolerant sind.

Gegenstand derErfindung ist außerdem die Verwendung von Herbizid-Kombinationen zur Bekämpfung von Schadpflanzen in Reiskulturen, dadurch gekennzeichnet, daß die jeweilige Herbizid-Kombination einen synergistisch wirksamen Gehalt an

(A) einem breitwirksamen Herbizid aus der Gruppe der Verbindungen, welche aus Glyphosate und dessen Alkalimetallsalzen oder Salzen mit Aminen, und Sulfosate
besteht,
und
(B) einem Herbizid aus der Gruppe der Verbindungen, welche aus

(B1) selektiv in Reis gegen monokotyle und dikotyle Schadpflanzen wirksamen Herbiziden mit Blattwirkung und Bodenwirkung (Residualwirkung) aus der Gruppe Propanil, Pendimethalin, Bispyribac-Na, Clomazone, Oxadiargyl, Oxadiazon, Azimsulfuron, Fluthiamide, Mesotrione und
(82) selektiv in Reis gegen dikotyle Schadpflanzen und/oder Seggen wirksamen Herbiziden aus der Gruppe 2,4-D, MCPA, Bensulfuron-methyl, Metsulfuron. Chlorsulfuron Carfentrazone, Bentazone, Chlorimuron und
(B3) selektiv in Reis gegen monokotyle Schadpflanzen wirksamen Herbiziden mit Blattwirkung aus der Gruppe Quizalofop-P, Quizalofop, Fenoxaprop-P, Fenoxaprop, Clodinafop oder
(B4) selektiv in Reis gegen monokotyle Schadpflanzen wirksamen Herbiziden mit Blatt- und Bodenwirkung aus der Gruppe Sethoxydim, Cycloxydim, Clethodim besteht,

aufweist und die Reiskulturen gegenüber den in der Kombination enthaltenen Herbiziden (A) und (B), gegebenenfalls in Gegenwart von Safenern, tolerant sind.

Gegenstand derErfindung ist außerdem die Verwendung von Herbizid-Kombinationen zur Bekämpfung von Schadpflanzen in Reiskulturen, dadurch gekennzeichnet, daß die jeweilige Herbizid-Kombination einen synergistisch wirksamen Gehalt an

(A) einem breitwirksamen Herbizid aus der Gruppe der Verbindungen, welche aus (A3) Imazethapyr, Imazapyr, Imazamethabenz, Imazamethabenz-methyl, Imazaquin, Imazamox, Imazapic (AC 263,222) und deren Salzen besteht,
und
(B) einem Herbizi aus der Gruppe der Verbindungen, welche aus

(B1) selektiv in Reis gegen monokotyle und dikotyle Schadpflanzen wirksamen Herbiziden mit Blattwirkung und Bodenwirkung (Residualwirkung) aus der Gruppe Propanil, Pendimethalin, Clomazone, und

(B3) selektiv in Reis gegen monokotyle Schsdpflanzen wirksamen Herbiziden mit Blattwirkung aus der Gruppe Fenoxaprop-P, Fenoxaprop, und Cyhalolop besteht,

aufweist und die Reiskulturen gegenüber den in der Kombination enthaltenen Herbiziden (A) und (B), gegebenenfalls in Gegenwart von Safenern, tolerant sind,

Neben den erfindungsgemäßen Herbizid-Kombinationen können weitere Pflanzenschutzmittelwirkstoffe und Pflanzenschutz übliche Hilfsstoffe und Formullerungshiffsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestelll werden. Möglich ist auch die Anwendung der Herbizide oder der Herbizid-Kombinationen in mehreren Portionen (Sequenzanwendung), z.B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.
Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl, 4-hydroxy-6-chlorpyridazin), eine Verbindung der Formel

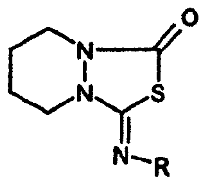

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl)-benzoesäure-4-oxetanylester (bekannt aus EP-A-496701) enthalten.
Einzelheiten Ober die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.
Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.
Aus WO-A-92/08353 und EP-A 0 252 237 sind bereits einige Herbizid-Kombinationen mit Glufosinate oder Glyphosate und anderen Herbiziden aus der Sulfonylharnstoffreihe wie Metsulfuron-methyl, Nicosulfuron, Primisulfuron, Rimsulfuron u.a. bekannt.
Die Anwendung der Kombinationen zur Bekämpfung von Schadpflanzen ist in den Druckschriften nur an wenigen Pflanzenspezies oder aber an keinem Beispiel gezeigt worden.
Chemical Abstracts no. 128:71911 (Weed Technol. 1997, 11, 662-666) und Proc.South. Weed Sci.Soc., 48 Meeting, 3,1995 beschreiben die Anwendung von Herbizidmischungen in transgenem Reis und normalem roten Reis, wobei Kombination von Glufosinate mit Pendimethalin, Thiobencarb, Quinchlorac, Propanil, Bensulfuron, Bentazon, Azifluorfen oder Triclopyr eingesetzt worden sind.
Aus EP-A-0252237 sind Kombinationen von Glufosinate und Imidazolinonen oder Sulfonylharnstoffen für den Einsatz im sogenannten "no-till-" oder "zero-till-Verfahren", nicht in toleranten Reiskulturen, beschrieben. Dabei sind die Kombination von Glufosinate(-ammonium) und Chlorsulfuron, Ethoxysulfuron und Bensulfuron-methyl erwähnt. WO-A-92/08353 erwähnt Ethoxysulfuron als Komponente für Glufosinate oder Glyphosate.

In eigenen Versuchen wurde gefunden, daß überraschenderweise große Unterschiede zwischen der Verwendbarkeit der in WO-A-98/09525 und den anderen Druckschriften erwähnten Herbizid-Kombinationen und auch anderer neuartiger Herbizid-Kombinationen in Pflanzenkulturen bestehen.
Erfindungsgemäßwerden Herbizid-Kombinationen bereitgestellt, die in toleranten Reiskulturen besonders günstig eingesetzt werden können.

Die Verbindungen der Formel (A1) bis (A3) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, Der Wirkstoff der Formel (A1) ist

(A1.2) Glufosinate-monoammonlumsalz oder
(A1.4) L-Glufosinate-monoammoniumsalz,

Die genannten Herbizide (A1.2) und (A1.4) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11 th Edition, British Crop Protection Council 1997, S. 643-645 bzw. 120-121. Während ein Einsatzgebiet im Nachauflauf Verfahren zur Bekämpfung von Unkräutern und Ungräsem in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g AS/ha, meist 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden.

In den erfindungsgemäßen Kombinationen benötigt man in der Regel deutlich weniger Wirkstoff (A1) beispielsweise eine Aufwandmenge im Bereich von 20 bis 800, vorzugsweise 20 bis 600 Gramm Aktivsubstanz Glufosinate pro Hektar (g AS/ha oder g a.i/ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit den blattwirksamen Herbiziden (A1) werden zweckmäßig in Reiskulturen eingesetzt, die gegenüber den Verbindungen (A1) resistent oder tolerant sind. Einige tolerante Reiskulturen, die gentechnisch erzeugt wurden, sind bereits bekannt und werden in der Praxis eingesetzt; vgl. Artikel In der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054).

Beispiele für Verbindungen (A2) sind

(A2.1) Glyphosate, d. h. N-(Phosphonomethyl)-glycin,
(A2.2) Glyphosate-monoisopropylammoniumsalz,
(A2.3) Glyphosate-natriumsalz,
(A2.4) Sulfosate, d. h. N-(Phosphonomethyl)-glycin-trimesiumsalz = N-(Phosphonomethyl)-glycin-trimethylsulfoxoniumsalz,

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung im Bereich von 0,050-5 kg AS/ha, meist 0,5-5 kg AS/ha. Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen; siehe "The Pesticide Manual" 11th Ed., British Crop Protection Council 1997 S. 646-649. In den erfindungsgemäßen Kombinationen benötigt man in der Regel Aufwandmengen im Bereich von 20 bis 1000, vorzugsweise 20 bis 800 g AS/ha Glyphosate.

Auch für Verbindungen (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Beispiele für Imidazolinon-Herbizide (A3) sind

(A3.1) Imazapyr und dessen Salze und Ester,
(A3.2) Imazethapyr und dessen Salze und Ester,
(A3.3) Imazamethabenz und dessen Salze und Ester,
(A3.4) Imazamethabenz-methyl,
(A3.5) Imazamox und dessen Salze und Ester,
(A3.6) Imazaquin und dessen Salze und Ester, z. B. das Ammoniumsalz,
(A3.7) Imazapic (AC 263,222) und dessen Salze und Ester, z. B. das Ammoniumsalz,

Die Herbizide hemmen das Enzym Acetolactatsynthase (ALS) und damit die Proteinsynthese in Pflanzen; sie sind sowohl boden- als auch blattwlrksam und weisen teilweise Selektivitäten in Kulturen auf; vgl. "The Pesticide Manual" 11th Ed., British Crop Protection Council 1997 S. 697-699 zu (A3.1), S. 701-703 zu (A3.2), S. 694-696 zu (A3.3) und (A3.4), S. 696-697 zu (A3.5), S. 699-701 zu (A3.6) und S. 5 und 6, referiert unter AC 263,222 (zu A3.7). Die Aufwandmengen der Herbizide sind üblicherweise zwischen 0,01 und 2 kg AS/ha, meist 0,1 bis 2 kg AS/ha. In den erfindungsgemäßen Kombinationen liegen sie im Bereich von 10 bis 800 g AS/ha, vorzugsweise 10 bis 200 g AS/ha.

Die Kombinationen mit Imidazolinonen werden zweckmäßig in Reiskulturen eingesetzt, die gegenüber den Imidazolinonen resistent sind. Derartige tolerante Kulturen sind bereits bekannt. EP-A-0360750 beschreibt z.B. die Herstellung von ALS-inhibitortolerenten Pflanzen durch Selektionsverfahren oder gentechnische Verfahren. Die Herbizid-Toleranz der Pflanzen wird hierbei durch einen erhöhten ALS-Gehalt in den Pflanzen erzeugt. US-A-5,198,599 beschreibt sulfonylhamstoff- und imidazolinontolerante Pflanzen, die durch Selektionsverfahren gewonnen wurden.

Als Kombinationspartner (B) für die Verbindungen A1 kommen Verbindungen der Untergruppen (B1) bis (B4) bestehend aus

(B1) selektiv in Reis gegen monokotyle und dikotyle Schadpflanzen wirksamen Herbiziden mit Blattwirkung und Bodenwirkung (Residualwirkung) nämlich

(B1.1) Molinate (PM, S. 847-849), d. h. Azepan-1-thiocarbonsäure-Sethylester,
(B1.12) Clomazone (PM, S. 256-257), d. h. 2-(2-Chlorbenzyl)-4,4-dimethyl-1,2-oxazolidin-3-on,
(B1.16) Anilofos (PM, S. 47-48), d. h. Dithiophosphorsäure-S-4-chlor-N-isopropylcarbaniloylmethyl-O,O-dimethyl-ester,
(B1.21) Oxadiazon (PM, S. 905-907), d. h. 3-tert.-Butyl-3-(2,4-dichlor-5-isopropoxy-phenyl)-1,3,4-oxadiazol-2(3H)-on)

und

(B2) selektiv In Reis gegen dikotyle Schadpflanzen und/oder Seggen wirksamen Herbiziden, beispielsweise

(B2.5) Metsulfuron methylester (PM, S. 842-844) (= 2-[[[[(4-Methoxy-6-methyl-1,3,5-triazin-2-yl)-amino]-carbonyl]-amino]-sulfonyl]-benzoesäure Ester der Methylester),
(B2.8) Pyrazosulfuron-ethyl (PM, S. 1052-1054) (= 5-(4,6-Dimethoxypyrimidin-2-ylcarbamoylsulfamoyl)-1-methyl-pyrazol-4-carbonsäure Ester nämlich der Ethylester),
(B2.13) Carfentrazone-ethyl (PM, S. 191-193) (= (RS)-2-Chlor-3-[2-chlor-5-(4-difluomethyl-4,5-dihydro-3-methyl-5-oxo-1H-1,2,4-triazol-1-yl)-4-fluorphenyl]-propionsäure Ester nämlich der Ethylester),
(B2.15) Benfuresate (PM, S. 98-99), d. h. Ethansulfonsäure-2,3-Dihydro-3,3-dimethyl-benzofuran-5-ylester,

und

(B3) selektiv in Reis gegen monokotyle Schadpflanzen wirksamen Herbiziden mit Blattwirkung und/oder-

(B3.2) Fenoxaprop Ethylester (PM, S. 519-520),

und

(B4) selektiv in Reis gegen monokotyle Schadpflanzen wirksamen Herbiziden mit Blatt- und Bodenwirkung, nämlich

(B4.4) Clefoxidim oder "BAS 625 H" (siehe AG Chem New Compound Review, Vol. 17,1999, S. 26, herausgegeben von AGRANOVA) (= 2-[1-2-(4-Chlorphenoxy)-propoxyimino)-butyl]-3-oxo-5-thion-3-ylcyclohex-1-enol)

in Frage.

Als Kombinationspartner (B) fur die Verbindungen (A2) kommen Verbindungen der Untergruppen (B1) bis (B4) bestehend aus

(B1) selektiv in Reis gegen monokotyle und dikotyle Schadpflanzen wirksamen Herbiziden mit Blattwirkung und Bodenwirkung (Residualwirkung) nämlich

(B1.4) Propanil (PM, S. 1017-1019), (= N-(3,4-dichlorphenyl)-propanamid),
(B1.5) Pendimethalin (PM, S. 937-939), d. h. N-(1-ethylpropyl)-2,6-dinitro-3,4-xylidin,
(B1.6) Bispyribac, Bispyribac-Na (KIH 2023)(PM, S. 129-131), d. h. 2,6-Bis-(4,6-dimethoxy-2-pyrimidin-2-yloxy)-benzoesäurenatriumsalz,
(B1.12) Clomazone (PM, S. 256-257), d. h. 2-(2-Chlorbenzyl)-4,4-dimethyl-1,2-oxazolidin-3-on,
(B1.13) Oxadiargyl (PM, S. 904-905), d. h. 5-tert.-Butyl-3-[2,4-dichlor-5-(prop-2-inyloxy)-phenyl]-1,3,4-oxadiazol-2(3H)-on,
(B1.21) Oxadiazon (PM, S. 905-907), d. h. 3-tert.-Butyl-3-(2,4-dichlor-5-isopropoxy-phenyl)-1,3,4-oxadiazol-2(3H)-on)
(B1.24) Azimsulfuron (PM, S. 63-65), d. h. 1-(4,6-Dimethoxypyrimidin-2-yl)-3-[1-methyl-4-(2-methyl-2H-tetrazol-5-yl)-pyrazol-5-ylsulfonyl]-harnstoff,
(B1.29) Fluthiamide (Fenfenacet, BAY FOE 5043; PM, S. 82-83) (= N-(4-Fluorphenyl)-N-(1-methylethyl)-2-[(trifluormethyl)-1,3,4-thiadiazol-2-yloxy]-acetamid),
(B1.30) Mesotrione, d. h. 2,(4-Mesyl-2-nitrobenzoyl)-cyclohexan-1,3-dion (ZA1296, vgl. Weed Science Society of America (WSSA) in WSSA Abstracts 1999, Bd. 39, Seite 65-66, Ziffern 130-132), und oder

und

(B2) selektiv in Reis gegen dikotyle Schadpflanzen und/oder Seggen wirksamen Herbiziden, nämlich

(B2.1) 2,4-D (PM, S. 323-327), d. h. (2,4-Dichlorphenoxy)-essigsäure, und dessen Ester und Salze,
(B2.2) MCPA (PM, S. 767-769). d. h. (4-Chlor-2-methylphenoxy)-essigsäure, und dessen Ester und Salze,
(B2.3) Bensulfuron-methyl (PM, S. 104-105), d. h. 2-[[[[[(4,6-Dimethoxy-2-pyrimidinyl)-amino]-carbonyl]-amino]-sulfonyl]-methyl]-benzoesäuremethylester,
(B2.5) Metsulfuron und dessen Ester wie der Methylester (PM, S. 842-844) (= 2-[[[[(4-Methoxy-6-methyl-1,3,5-triazin-2-yl)-amino]-carbonyl]-amino]-sulfonyl]-benzoesäure bzw. deren Ester wie der Methylester),

(B2.11) Chlorsulfuron (PM, S. 239-240), d. h. 1-(2-Chlorphenylsulfonyl)-3-(4-methoxy-6-methyl-1,3,5-triazin-2-yl)-harnstoff,
(B2.13) Carfentrazone und dessen Ester wie Carfentrazone-ethyl (PM, S. 191-193) (= (RS)-2-Chlor-3-[2-chlor-5-(4-difluormethyl-4,5-dihydro-3-methyl-5-oxo-1H-1,2,4-triazol-1-yl)-4-fluorphenyl]-propionsäure und deren Ester wie der Ethylester),
(B2.14) Bentazone (PM, S. 109-111), d. h. 3-isopropyl-1H-2,1,3-benzothiadiazin-4-(3H)-on-2,2-dioxid),
(B2.16) Chlorimuron und dessen Ester wie Chlorimuron-ethyl (PM, S. 217-218) (= 2-(4-Chlor-2-methoxypyrimidin-2-ylcarbamoylsulfamoyl)-benzoesäure bzw. deren Ester wie der Ethylester) und/oder gegebenenfalls

und
(B3) selektiv in Reis gegen monokotyle Schadpflanzen wirksamen Herbiziden mit Blattwirkung nämlich

(B3.1) Quizalofop-P und dessen Ester wie der Ethyl- oder Tefurylester (PM, S. 1089-1092), auch in der Form der Gemische der optischen Isomeren, z. B. dem racemischen Gemisch Quizalofop und dessen Ester,
(B3.2) Fenoxaprop-P und dessen Ester wie der Ethylester (PM, S. 519-520), auch In der Form der Gemische der optischen Isomeren, z. B. dem racemischen Gemisch Fenoxaprop-ethyl,
(B3.6) Clodinafop und dessen Esterwie der Propargylester (PM, S. 251-252) (= (R)-2-[4-(5-Chlor-3-fluor-pyrid-2-yloxy)-phenoxy]-propionsäure bzw. -propargylester) und/oder

und
(B4) selektiv in Reis gegen monokotyle Schadpflanzen wirksamen Herbiziden mit Blatt- und Bodenwirkung, nämlich

(B4.1) Sethoxydim (PM, S. 1101-1103),
(B4.2) Cycloxydim (PM, S. 290-291) und/oder
(B4.3) Clethodim (PM, S. 250-251) und/oder gegebenenfalls

in Frage.

Als Kombinationspartner (B) fur die Verbindung (A3) kommen Verbindungen der Untergruppen (B1) und (B3) bestehend aus

(B1) selektiv in Reis gegen monokotyle und dikotyle Schadpflanzen wirksamen Herbiziden mit Blattwirkung und Bodenwirkung (Residualwirkung) nämlich

(B1.4) Propanil (PM, S. 1017-1019), (= N-(3,4-dichlorphenyl)-propanamid),
(B1.5) Pendimethalin (PM, S. 937-939), d. h. N-(1-ethylpropyl)-2,6-dinitro-3,4-xylidin,
(B1.12) Clomazone (PM, S. 256-257), d. h. 2-(2-Chlorbenzyl)-4,4-dimethyl-1 ,2-oxazolidin-3-on,
(B1.30) Mesotrione, d. h. 2,(4-Mesyl-2-nitrobenzoyl)-cyclohexan-1,3-dion (ZA1296, vgl. Weed Science Society of America (WSSA) in WSSA Abstracts 1999, Bd. 39, Seite 65-66, Ziffern 130-132), und oder

und
(B3) selektiv in Reis gegen monokotyle Schadpflanzen wirksamen Herbiziden mit Blattwirkung namlich

(B3.2) Fenoxaprop-P und dessen Ester wie der Ethylester (PM, S. 519-520), auch In der Form der Gemische der optischen Isomeren, z. B. dem racemischen Gemisch Fenoxaprop-ethyl,

(B3.7) Cyhalofopund dessen Ester wie der Butylester (PM, S. 297-298) (= (R)-2-[4-(4-Cyano-2-fluor-phenoxy)-phenoxyl-proplonsäure bzw. - butylester)

in Frage.

Im Falle von Wirkstoffen auf Basis von Carbonsäuren oder anderen salz- oder esterbildenden Wirkstoffen soll die Bezeichnung der Herbizide durch den "common name" der Säure im allgemeinen auch die Salze und Ester erfassen, vorzugsweise die handelsüblichen Salze und Ester, insbesondere die gängige Handelsform des Wirkstoffes.

Die Aufwandmengen der Herbizide (B) können von Herbizid zu Herbizid stark variieren. Als grobe Richtgröße können folgende Bereiche gelten:

Zu Verbindungen (B1) 1-7000 g AS/ha, vorzugsweise 10-5000 g AS/ha,

(fortgesetzt)

| | |
|---|---|
| Zu Verbindungen (B2): | 0,1-3000 g AS/ha, vorzugsweise 1-2000 g AS/ha |
| Zu Verbindungen (B3): | 5-500 g AS/ha, vorzugsweise 10-350 g AS/ha, |
| Zu Verbindungen (B4): | 5-2000 g AS/ha, vorzugsweise 10-1000 g AS/ha, |

Im Einzelnen sind folgende Aufwandmengen in g AS/ha bevorzugt:

(B1.1) 50-5000, vorzugsweise 100-4000,
(B1.4) 50-5000, vorzugsweise 100-4000,
(B1.5) 200-5000, vorzugsweise 300-3000,
(B1.6) 5-120, vorzugsweise 10-90,
(B1.12) 200-1200, vorzugsweise 300-1000,
(B1.13) 25-500, vorzugsweise 50-300,
(B1.16) 50-1500, vorzugsweise 75-1200,
(B1.21) 50-5000, vorzugsweise 100-4000,
(B1.24) 10-100, vorzugsweise 15-80,
(B1.29) 200-2000, vorzugsweise 250-1500,
(B1.30) 20-400, vorzugsweise 30-300,

(B2.1) 200-2000, vorzugsweise 400-1500,
(B2.2) 200-2000, vorzugsweise 400-1500,
(B2.3) 5-120, vorzugsweise 10-50,
(B2.5) 0,1-20, vorzugsweise 0,5-10,
(B2.8) 5-120, vorzugsweise 10-60,
(B2.8) 5-120, vorzugsweise 10-60,
(B2.11) 1-100, vorzugsweise 5-90,
(B2.13) 1-150, vorzugsweise 5-120,
(B2.14) 200-3000, vorzugsweise 400-2000,
(B2.15) 50-2000, vorzugsweise 100-1500,
(B2.16) 5-120, vorzugsweise 10-90,

(B3.1) 10-150, vorzugsweise 20-100,
(B3.2) 10-150, vorzugsweise 20-100,
(B3.6) 5-150, vorzugsweise 10-120,
(B3.7) 15-450, vorzugsweise 25-350;

(B4.1) 100-1500, vorzugsweise 150-1200,
(B4.2) 100-1000, vorzugsweise 120-900,
(B4.3) 10-400, vorzugsweise 20-300,
(B4.4) 50-500, vorzugsweise 60-400.

Die Mengenverhältnisse der Verbindungen (A) und (B) ergeben sich aus den genannten Aufwandmengen für die Einzelstoffe. Beispielsweise sind folgende Mengenverhältnisse von besonderem Interesse:

(A):(B) im Bereich von 2000:1 bis 1:1000, vorzugsweise von 200:1 bis 1:100,
(A1):(B1) vorzugsweise von 200:1 bis 1:250, insbesondere von 200:1 bis 1:100,
(A1):(B2) vorzugsweise von 1500:1 bis 1:100, insbesondere von 200:1 bis 1:50,
(A1):(B3) vorzugsweise von 300:1 bis 1:30, insbesondere von 100:1 bis 1:10,
(A1):(B4) vorzugsweise von 200:1 bis 1:50, insbesondere von 100:1 bis 1:40, ganz besonders 100:1 bis 1:10,
(A2):(B1) vorzugsweise von 200:1 bis 1:50, insbesondere von 100:1 bis 1:40, ganz besonders 100:1 bis 1:20,
(A2):(B2) vorzugsweise von 2000:1 bis 1:30, insbesondere von 1500:1 bis 1:20, ganz besonders 300:1 bis 1:10,
(A2):(B3) vorzugsweise von 400:1 bis 1:10, insbesondere von 200:1 bis 1:10, ganz besonders 100:1 bis 1:5,
(A2):(B4) vorzugsweise von 200:1 bis 1:20, insbesondere 100:1 bis 1:10,
(A3):(B1) vorzugsweise von 200:1 bis 1:500, insbesondere 150:1 bis 1:500, ganz besonders 20:1 bis 1:500, ganz bevorzugt von 10:1 bis 1:100,
(A3):(B3) vorzugsweise von 1000:1 bis 1:1000, insbesondere, 800:1 bis 1:200, ganz besonders 300:1 bis 1:200,

ganz bevorzugt 300:1 bis 1:40,
(A3):(B4) vorzugsweise von 200:1 bis 1:1500, insbesondere 100:1 bis 1:1200, ganz besonders 40:1 bis 1:1000,

Von besonderem Interesse ist die Anwendung der Kombinationen

(A1.2) + (B1.1), (A1.2) + (B1.12),
(A1.2) + (B.1.16),
(A1.2) + (B1.21),
(A1.2) + (B2.5),
(A1.2) + (B2.8),
(A1.2) + (B2.13),
(A1.2) + (B2.15),
(A1.2) + (B3.2),
(A1.2) + (B4.4),
(A2.2) + (B1.4), (A2.2) + (B1.5), (A2.2) + (B1.6),
(A2.2) + (B1.12), (A2.2) + (B1.13),
(A2.2) + (B1.21),
(A2.2) + (B1.24),
(A2.2) + (B1.29), (A2.2) + (B1.30),
(A2.2) + (B2.1), (A2.2) + (B2.2), (A2.2) + (B2.3), (A2.2) + (B2.5)
(A2.2) + (B2.11), (A2.2 + (B2.13), (A2.2) + (B2.14), (A2.2) + (B2.16), (A2.2) + (B3.1), (A2.2) + (B3.2),
(A2.2) + (B3.6).
(A2.2) + (B4.1). (A2.2) + (B4.2), (A2.2) + (B4.3).

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formullerungshiffsmittel eingesetzt werden.
Zusatzstoffe sind beispielsweise Düngemittel und Farbstoffe.
Bevorzugt sind Herbizid-Kombinationen aus einer Verbindung (A) mit einer Verbindung der Gruppe (B1) oder (B2) oder (B3) oder (84).
Dabei sind auch solche Kombinationen mit (A2) und (A3) erdindungsgemäß, denen noch ein oder mehrere weitere Wirkstoffe gegebenenfalls Safener, zugesetzt werden wie (A) + (B1) +(C), (A) + (B2) + (C), (A) + (83) + (C) oder (A) + (B4) + (C).
Herbizid-Kombinationen mit (A1) können andere Wirkstoffe aus der Gruppe der Safener, Fungizide, Insektizide oder Pflanzenwachstumsregulatoren enthalten.
Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind.
Von besonderem Interesse ist auch die erfindungsgemäße Verwendung der Kombinationen die aus einem Herbizid aus der Gruppe (A), vorzugsweise (A1.2) und einem Herbizid aus der Gruppe, welche aus

(B1') selektiv in Reis gegen monokotyle und dikotyle Schadpflanzen wirksamen Herbiziden mit Blattwirkung und Bodenwirkung (Residualwirkung) aus der Gruppe Molinate, Clomazone, Anilofos, Oxadiazon,
(B2') selektiv in Reis gegen dikotyle Schadpflanzen und/oder ethyl Seggen wirksamen Herbiziden aus der Gruppe Pyrazosulfuron, Carfentrazone ethyl Benfuresate,
(B3') selektiv in Reis gegen monokotyle Schadpflanzen wirksamen Herbiziden mit Blattwirkung aus der Gruppe enoxaprop-ethyl, und
(B4') selektiv in Reis gegen monokotyle Schadpflanzen wirksamen Herbizid mit Blatt- und Bodenwirkung aus der Gruppe Clefoxidim

und gegebenenfalls im Pflanzenschutz übliche Zusatzstoffe und Formulierungshilfsmittel.
Von besonderem Interesse ist außerdem auch die erfindungsgemäße Verwendung der Kombinationen mit einem oder mehreren Herbiziden aus der Gruppe (A2), und einem Herbizid vorzugsweise einem Herbizid, aus der Gruppe, welche aus

(B1') selektiv in Reis gegen monokotyle und dikotyle Schadpflanzen wirksamen Herbiziden mit Blattwirkung und Bodenwirkung (Residualwirkung) aus der Gruppe Propanil, Pendimethalin, Bispyribac-Na, Clomazone, Oxadiargyl, Oxadiazon, Fluthiamide und Mesotrione,

(B2') selektiv in Reis gegen dikotyle Schadpflanzen und/oder Seggen wirksamen Herbiziden aus der Gruppe Bensulfuron-methyl, Chlorsulfuron, Carfentrazone, Bentazone, Chlorimuron.

(B3') selektiv in Reis gegen monokotyle Schadpflanzen wirksamen Herbiziden mit Blattwirkung aus der Gruppe Quizalofop-P, Fenoxaprop-P, Fluazifop-P, Clodinafop und

(B4') selektiv in Reis gegen monokotyle Schadpflanzen wirksamen Herbiziden mit Blatt- und Bodenwirkung aus der Gruppe Sethoxydim, Cycloxydim, Clethodim

und gegebenenfalls im Pflanzenschutz übliche Zusatzstoffe und Formulierungshilfsmittel enthält.

Von besonderem Interesse ist auch die erfindungsgemäße Verwendung der Kombinationen mit einem oder mehreren Herbiziden aus der Gruppe (A3), und mit einem Herbizid, vorzugsweise einem Herbizid, aus der Gruppe, welche aus

(B1') selektiv in Reis gegen monokotyle und dikotyle Schadpflanzen wirksamen Herbiziden mit Blattwirkung und Bodenwirkung (Residualwirkung) aus der Gruppe Propanil, Pendimethalin, Clomazone, und Mesotrione,

(B3') selektiv in Reis gegen monokotyle Schadpflanzen wirksamen Herbiziden mit Blattwirkung aus der Gruppe Fenoxaprop-P und Cyhalofop

und gegebenenfalls im Pflanzenschutz übliche Zusatzstoffe und Formulierungshilfsmittel enthält.

Einige der erfindungsgemäß zu verwendenden Herbizid-Kombinationen sind neu, vorzugsweise die aus den Kombinationen (A)+(B').

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf oder Nachauflaufverfahren ausgebracht werden. Bevorzugt ist die Anwendung im Nachauflaufverfahren oder im frühen Nach-saat-Vorauflautverfahren.

im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll. Auf der Seite der monokotylen Unkrautarten werden z.B. Echinochloa spp., Brachlaria spp., Leptochloa spp. und Digitaria spp. gut erfaßt, aber auch Panicum spp., Agropyron spp., Wildgetreideformen und Sorghum spp., Setaria spp., Alopecurus spp., Avena spp., Apera spica venti, Lolium spp., Phalaris spp. Cynodon spp., Poa spp. sowie Cyperusarten und Imperata.

Bei dikotylen Unkrautarten erstreckt sich das Wirkungsspektrum auf Arten wie z.B. Amaranthus spp., Sphenoclea spp., Heteranthera spp., Eleocharis spp., Ipomoea spp., Eschynomena spp., Sesbania spp. und Cyperrus spp. gut erfaßt, aber auch Polygonum spp., Xanthium spp., Equisetum, Chenopodium spp., Abutilon spp., Anthemis spp., Lamium spp., Matricaria spp., Stellaria spp., Kochia spp., Viola spp., Datura spp., Chrysanthemum spp., Thlaspi spp., Pharbitis spp.,Sida spp., Sinapis spp., Cupsella spp., Ambrosia spp., Galium spp., Emex spp., Lamium spp., Papaver spp., Solanum spp., Cirsium spp., Veronica spp., Convolvulus spp., Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimbiattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt Ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfu ng eines breiteren Spektrums von Unkräutern und Ungräsern, einen schnelleren Eintritt der herbiziden Wirkung, eine längere Dauerwirkung, eine bessere Kontrolle der Schadpflanzen mit nur einerbzw. wenigen Applikationen sowie eine

Ausweitung des möglichen Anwendungszeitraumes. Teilweise wird durch den Einsatz der Mittel auch die Menge an schädlichen inhaltsstoffen in der Kulturpflanze, wie Stickstoff oder Ölsäure, reduziert.
Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber monound dikotylen Unkräutern aufweisen, werden die toleranten bzw. kreuztoleranten Reispflanzen nur unwesentlich oder gar nicht geschädigt.

Darüberhinaus weisen die erfindungsgemäßen Mittel teilweise hervorragende wachstumsregulatorische Eigenschaften bei den Reispflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Reiskulturen oder noch zu entwickelnden toleranten oder gentechnisch veränderten Reiskulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregem von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
  Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologischeTechniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einerentsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu

erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991),95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Reiskulturen, dadurch gekennzeichnet, daß man ein Herbizid des Typs (A) mit einem Herbizid des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshitfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formullerungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Dartand Books, Caldwell N.J.; H.v. Olphen, "Introduction to Clay Colloid Chemistry"; 2nd Ed., J. Wiley & Sons, N.Y. Marsden, "Solvents Gulde", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden

In der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-Q476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkyl-polyglykolethersulfate auch als Penetrationshilfsmittel und Wirkungsverstärker für eine Reihe anderer Herbizide, unter anderem auch für Herbizide aus der Reihe der imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden-bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind.

Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Telle eines Wirkstoffs/Wirksstoffgemischs und 90 Gew. -Teile Talkum als Inertstoff mischt und in einer Schlagmühle zerkleinert.

b) Ein In Wasser leicht dispergierbares, benetzbares Pulver wird erhalten, indem man 25 Gew.-Teile eines Wirkstoffs/Wirksstoffgemischs. 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teiten Alkylphenolpolyglykolether (®Trirton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew. -Teilen Cyclohexanon als Lösemittel und 10 Gew-Teilen oxethyliertem Nonylphenol als Emulgator.

e) Ein in Wasser dispergierbares Granulat wird erhalten indem man

| | |
|---|---|
| 75 Gew.-Teile | eines WirkstoffslWirksstoffgemischs, |
| 10 Gew.-Teile | ligninsulfonsaures Calcium, |
| 5 Gew.-Teile | Natriumlaurylsulfat, |
| 3 Gew.-Teile | Polyvinylalkohol und |
| 7 Gew.-Teile | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 Gew.-Teile | eines Wirkstoffs/Wirksstoffgemischs, |
| 5 Gew.-Teile | 2,2'-dinaphthylmethan-6,6'-disulfonsaures Natrium, |
| 2 Gew.-Teile | oleoylmethyltaurinsaures Natrium, |
| 1 Gew.-Teil | Polyvinylalkohol, |
| 17 Gew.-Teile | Calciumcarbonat und |
| 50 Gew.-Telle | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auftaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).

Wenn die beobachteten Wirkungswerte bereits die formale Summe (= $E^A$) der Werte zu den Versuchen mit Einzelapplikationen übertreffen, dann übertreffen sie den Erwartungswert nach Colby (=$E^C$) ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Wirkung auf Schadpflanzen in Reis (Paddy-Reis)

Verpflanzter und gesäter Reis sowie typische Reisunkräuter und -ungräser werden im Gewächshaus bis zum Dreiblattstadium (Echinochloa crus- galil 1,5-Blatt) unter Paddyreis-Bedingungen (Anstauhöhe des Wassers: 2 - 3 cm) in geschlossenen Plastiktöpfen angezogen. Danach erfolgt die Behandlung mit den erfindungsgemäßen Verbindungen. Hierzu werden die formulierten Wirkstoffe in Wasser suspendiert, gelöst bzw. emulgiert und mittels Gießapplikation in das Anstauwasser der Test-pflanzen In unterschiedlichen Dosierungen ausgebracht.
Nach der so durchgeführten Behandlung werden die Versuchspflanzen im Gewächshaus unter optimalen Wachstumsbedingungen aufgestellt und während der gesamten Versuchszeit so gehalten. Etwa drei Wochen nach der Applikation erfolgt die Auswertung mittels optischer Bonitur der Pflanzenschäden im Vergleich zu unbehandelten Kontrollen. Die erfindungsgemäßen Kombinationen weisen zeigen sehr gute herbizide Wirkung gegen Schadpflanzen auf, die typisch für Reiskulturen sind.

4. Herbizide Wirkung und Kulturpflanzenverträglichkeit (Feldversuch)

Pflanzen von transgenem Reis mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Reispflanzen die Verunkrautung natürlich ein. Felder wurden für Auflandreis oder alternativ auch für Paddy-Reis eingerichtet. Die Behandlung mit den erfindungsgemäßen Mitteln und zur Kontrolle separat mit alleiniger Applikation der Komponentenwirkstoffe erfolgte unter Standardbedingungen, z. B. mit einem Parzellen-Spritzgerät bei einer Wasseraufwandmenge von 200-300 Liter je Hektar, in Parallelversuchen gemäß dem Schema aus Tabelle 1 (Vorsaatbehandlung nicht bei Paddy-Reis):

Tabelle 1:

| Anwendungsschema - Beispiele | | | | | |
|---|---|---|---|---|---|
| Applikation der Wirkstoffe | Vorsaat | Vorauflauf nach Saat | Nachauflauf 1-2-Blatt | Nachauflauf 2-4-Blatt | Nachauflauf 6-Blatt |
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A)+(B) | (A)+(B) | | | |
| " | | (A)+(B) | (A)+(B) | | |
| " | | (B) | | (A) | |
| " | | (B) | | (A)+(B) | |
| " | | | (A)+(B) | (A)+(B) | |
| " | | | (A)+(B) | (A)+(B) | (A)+(B) |
| " | (B) | | (A) | (A)+(B) | |
| " | | (B) | | (A)+(B) | (A)+(B) |

(fortgesetzt)

| Anwendungsschema - Beispiele | | | | | |
|---|---|---|---|---|---|
| Applikation der Wirkstoffe | Vorsaat | Vorauflauf nach Saat | Nachauflauf 1-2-Blatt | Nachauflauf 2-4-Blatt | Nachauflauf 6-Blatt |
| " | | | | (A)+(B) | (A)+(B) |
| " | | | (A) | (A)+(B) | (A)+(B) |

im Abstand von 2, 4, 6 und B Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen- und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby (vgl. Bonitur in Beispiel 1) und weisen deshalb auf einen Synergismus hin. Die Reispflanzen dagegen wurden infolge der Behandlungen mit den herbiziden Mitteln nicht oder nur unwesentlich geschädigt.

In den nachfolgenden Tabellen allgemein verwendete Abkürzungen:

g AS/ha = Gramm Aktivsubstanz (100 % Wirkstoff) pro Hektar
EA = Summe der herbiziden Wirkungen der Einzelapplikationen
EC = Erwartungswert nach Colby (vgl. Bonitur zu Tabelle 1)

Tabelle 1.

| Herbizide Wirkung bei Reisunkräutem (Feldversuch) | | |
|---|---|---|
| Wirkstoff(e) | Dosis [1)] g AS/ha | Herbizide Wirkung[2)] (%) gegen Echinochloa crus galli |
| (A1.2) | 250<br>500 | 63<br>87 |
| (B1.12) | 400 | 7 |
| (A1.2) + (B1.12) | 250 + 400<br>500 + 400 | 70 ($E^C$ =65,6)<br>96 ($E^A$ =94) |
| Abkürzungen zu Tabelle 1<br>1) = Applikation Im 4-Blattstadium<br>(A1.2) = Glufosinate-ammonium<br>2) = Bonitur 42 Tage nach Applikation<br>(B1.12) = Clomazone | | |

Tabelle 2.

| Herbizide Wirkung bei Reisunkräutem (Feldversuch) | | |
|---|---|---|
| Wirkstoff(e) | Dosis [1)] g AS/ha | Herbizide Wirkung[2)] (%) gegen Cyperus difformis |
| (A1.2) | 500<br>400 | 40<br>18 |
| (B2.13) | 50 | 28 |
| (A1.2) + (B2.13) | 400 + 50 | 88 ($E^A$ = 46) |
| (B2.8) | 15 | 65 |

(fortgesetzt)

| Herbizide Wirkung bei Reisunkräutem (Feldversuch) | | |
|---|---|---|
| Wirkstoff(e) | Dosis 1) g AS/ha | Herbizide Wirkung2) (%) gegen Cyperus difformis |
| (A1.2) + (B2.8) | 400 + 15 | 92 ($E^A$ = 83) |
| (B2.15) | 200 | 35 |
| (A1.2) + (B2.15) | 400 + 200 | 65 ($E^A$ =53) |

Abkürzungen zu Tabelle 2
1) = Applikation im 3-Blallstadium
(A1.2) = Glufosinate-ammonium
(B2.13) = Carfentrazone-ethyl
(B2.15) = Benfuresate
2) = Bonitur 36 Tage nach Applikation
(B2.6) = Pyrazosulfuron-ethyl

Tabelle 3.

| Herbizide Wirkung bei Reisunkräutem (Feldversuch) | | |
|---|---|---|
| Wirkstoff(e) | Dosis 1) g AS/ha | Herbizide Wirkung2) (%) gegen Cyperus iria |
| (A1.2) | 400 | 35 |
| (B1.21) | 250 | 37 |
| (A1.2) + (B1.21) | 400 + 250 | 85 ($E^A$ - = 72) |
| (B2.5) | 1 | 35 |
| (A1.2) + (82.5) | 400 + 1 | 83 ($E^A$ = 70) |

Abkürzungen zu Tabelle 3
1) = Applikation Im 3-Blattstadium
(A1.2) = Glulosinate-ammonium
(B2.5) =Metsulfuron-methyl
2) = Bonitur 42 Tage nach Applikation
(B1.21)=Oxadiazon

Tabelle 4.

| Herbizide Wirkung bei Reisunkräutern (Feldversuch) | | |
|---|---|---|
| Wirkstoff(e) | Dosis 1) g AS/ha | Herbizide Wirkung2) (%) gegen Echinochloa crus galli |
| (A1.2) | 400 | 65 |
| (B3.2) | 45 | 15 |
| (A1.2) + (B3.2) | 400 + 45 | 88 ($E^A$ =80) |

Abkürzungen zu Tabelle 4
1) = Applikation im 3-Blattstadlum
(A1.2) = Glufosinate-ammonium
(B3.2) = Fenoxaprop-ethyl
2) = Bonitur 42 Tage nach Applikation

Tabelle 5.

| Herbizide Wirkung bei Reisunkräutem (Feldversuch) | | |
|---|---|---|
| Wirkstoff(e) | Dosis [1)] g AS/ha | Herbizide Wirkung[2)] (%) gegen Aeschynomene rudis |
| (A1.2) | 500<br>250 | 83<br>65 |
| (B1.16) | 450 | 27 |
| (A1.2) + (B1.16) | 400 + 450 | 96 ($E^A$ =92) |
| Abkürzungen zu Tabelle 5<br>[1)] = Applikation Im 3-Blattstadium<br>(A1.2) = Glufosinate-ammonium<br>[2)] = Bonitur 28 Tage nach Applikation<br>(B1.16) = Anilofos | | |

Tabelle 6.

| Herbizide Wirkung bei Reisunkräutem (Feldversuch) | | |
|---|---|---|
| Wirkstoff(e) | Dosis[1)] g AS/ha | Herbizide Wirkung[2)] (%) gegen Echinochloa crus galli |
| (A1.2) | 500 | 18 |
| (B1.1) | 4480 | 0 |
| (A1.2) + (B1.1) | 500 + 4480 | 70 ($E^A$ =18) |
| Abkürzungen zu Tabelle 6<br>[1)] = Applikation im 5-6-Blattstadium<br>(A1.2) = Glufosinate-ammonium<br>[2)] = Bonitur 36 Tage nach Applikation<br>(B1.1) = Molinate | | |

Tabelle 7.

| Herbizide Wirkung bei Reisunkräutem (Feldversuch) | | |
|---|---|---|
| Wirkstoff(e) | Dosis[1)] g AS/ha | Herbizide Wirkung[2)] (%) gegen Echinochloa crrus-galli |
| (A1.2) | 500<br>250 | 75<br>35 |
| (B4.4) | 75<br>37,5 | 83<br>50 |
| (A1.2) + (B4.4) | 250 + 37,5 | 93 ($E^A$ =85) |
| Abkürzungen zu Tabelle 7<br>[1)] = Applikation im 4-Blattstadium<br>(A2.2) = Glufosinate-ammonlum<br>[2)] = Bonitur 26 Tage nach Applikation<br>(B4.4) = Clefoxidim | | |

**Patentansprüche**

1. Verwendung von Herbizid-Kombinationen zur Bekämpfung von Schadpflanzen in Reiskulturen, **dadurch gekennzeichnet, daß** die jeweilige Herbizid-Kombination aus einem synergistisch wirksamen Gehalt an

(A) einem breitwirksamen Herbizid

(A1) Glufosinate-ammonium

besteht,
und
(B) einem Herbizid aus der Gruppe der Verbindungen, welche aus

(B1) selektiv in Reis gegen monokotyle und dikotyle Schadpflanzen wirksamen Herbiziden mit Blattwirkung und Bodenwirkung (Residualwirkung) aus der Gruppe Molinate, Clomazone, Anilofos, Oxadiazon, und
(B2) selektiv in Reis gegen dikotyle Schadpflanzen und/oder Seggen wirksamen Herbiziden aus der Gruppe Metsulfuron-methyl, Pyrazosulfuron-ethyl, Carfentrazone-ethyl, Benfuresate, und
(B3) selektiv in Reis gegen monokotyle Schadpflanzen wirksamen Herbiziden mit Blattwirkung aus der Gruppe Fenoxaprop-ethyl oder
(B4) selektiv in Reis gegen monokotyle Schadpflanzen wirksamen Herbizid mit Blatt- und Bodenwirkung Clefoxidim besteht,

besteht und die Reiskulturen gegenüber den in der Kombination enthaltenen Herbiziden (A) und (B), gegebenenfalls in Gegenwart von Safenern, tolerant sind, und die Herbizid-Kombination optional andere Wirkstoffe aus der Gruppe der Safener, Fungizide, Insektizide und Pflanzenwachstumsregulatoren, und optional im Pflanzenschutz übliche Zusatz- und Formulierungshilfsmittel enthält.

2. Verwendung von Herbizid-Kombinationen zur Bekämpfung von Schadpflanzen in Reiskulturen, **dadurch gekennzeichnet, daß** die jeweilige Herbizid-Kombination einen synergistisch wirksamen Gehalt an

(A) einem breitwirksamen Herbizid aus der Gruppe der Verbindungen, welche aus (A2) Glyphosate und dessen Alkalimetallsalzen oder Salzen mit Aminen und Sulfosate, besteht,
und
(B) einem Herbizid aus der Gruppe der Verbindungen, welche aus

(B1) selektiv in Reis gegen monokotyle und dikotyle Schadpflanzen wirksamen Herbiziden mit Blattwirkung und Bodenwirkung (Residualwirkung) aus der Gruppe Propanil, Pendimethalin, Bispyribac-Na, Clomazone, Oxadiargyl, Oxadiazon, Azimsulfuron, Fluthiamide, Mesotrione und
(B2) selektiv in Reis gegen dikotyle Schadpflanzen und/oder Seggen wirksamen Herbiziden aus der Gruppe 2,4-D, MCPA, Bensulfuron-methyl, Metsulfuron, Chlorsulfuron, Carfentrazone, Bentazone, Chlorimuron, und
(B3) selektiv in Reis gegen monokotyle Schadpflanzen wirksamen Herbiziden mit Blattwirkung aus der Gruppe Quizalofop-P, Quizalafop, Fenoxaprop-P, Fenoxaprop, Clodinafop und
(B4) selektiv in Reis gegen monokotyle Schadpflanzen wirksamen Herbiziden mit Blatt- und Bodenwirkung aus der Gruppe Sethoxydim, Cycloxydim, Clethodim besteht,

aufweist und die Reiskulturen gegenüber den in der Kombination enthaltenen Herbiziden (A) und (B), gegebenenfalls in Gegenwart von Safenem, tolerant sind.

3. Verwendung von Herbizid-Kombinationen zur Bekämpfung von Schadpflanzen in Reiskulturen, **dadurch gekennzeichnet, daß** die jeweilige Herbizid-Kombination einen synergistisch wirksamen Gehalt an

(A) einem breitwirksamen Herbizid aus der Gruppe der Verbindungen, welche aus
(A3) Verbindungen der Gruppe Imazethapyr, Imazapyr, Imazamethabenz, Imazamethabenz-methyl, Imazaquin, Imazamox und Imazapic und deren Setzen besteht,
und
(B) einem Herbizid aus der Gruppe der Verbindungen, welche aus

(B1) selektiv in Reis gegen monokotyle und dikotyle Schadpflanzen wirksamen Herbiziden mit Biattwirkung und Bodenwirkung (Residualwirkung) aus der Gruppe Propanil, Pendimethalin, Clomazone, Mesotrione und
(B3) selektiv in Reis gegen monokotyle Schadpflanzen wirksamen Herbiziden mit Blattwirkung aus der Gruppe Fenoxaprop-P, Fenoxaprop, und Cyhalofop besteht,

aufweist und die Reiskulturen gegenüber den in der Kombination enthaltenen Herbiziden (A) und (B), gegebenenfalls in Gegenwart von Safenem, tolerant sind.

4. Verwendung nach Anspruch 2, **dadurch gekennzeichnet, dass** als Wirkstoff (A) Glyphosate-isopropylammonium eingesetzt wird.

5. Verwendung nach einem der Ansprüche 1 bis 4, **dadurch gekennzeichnet, daß** die Herbizid-Kombination im Pflanzenschutz übliche Hilfsstoffe und Formulierungshilfsmittel enthält.

6. Verfahren zur Bekämpfung von Schadpflanzen in Reiskulturen, **dadurch gekennzeichnet, daß** man Herbizide einer Herbizid-Kombination, definiert gemäß einem oder mehreren der Ansprüche 1 bis 3, gemeinsam oder getrennt im Vorauflauf, Nachauflauf oder im Vor- und Nachauflauf auf die Pflanzen, Pflanzenteile, Pflanzensamen oder die Anbaufläche appliziert und daß die Reiskulturen gegenüber den in der Kombination enthaltenen Herbiziden, gegebenenfalls in Gegenwart von Safenern, tolerant sind.

7. Herbizide Zusammensetzung, **dadurch gekennzeichnet, daß** sie aus einer Kombination aus

(A) einem breitwirksamen Herbizid

(A1) Glufosinate-ammonium

besteht,
und einem Herbizid (B) aus der Gruppe der Verbindungen, welche aus

(B1') selektiv in Reis gegen monokotyle und dikotyle Schadpflanzen wirksamen Herbiziden mit Blattwirkung und Bodenwirkung (Residualwirkung) aus der Gruppe Anilofos, Oxadiazon,
(B2') selektiv in Reis gegen dikotyle Schadpflanzen und/oder Seggen wirksamen Herbiziden aus der Gruppe Pyrazosulfuron-ethyl,
(B4') selektiv in Reis gegen monokotyle Schadpflanzen wirksamen Herbizid mit Blatt- und Bodenwirkung Clefoxidim besteht,

besteht,
und die Herbizid-Kombination optional andere Wirkstoffe aus der Gruppe der Safener, Fungizide, Insektizide und Pflanzenwachstumsregulatoren, und optional im Pflanzenschutz übliche Zusatz- und Formulierungshilfsmittel enthält.

8. Verwendung der nach Anspruch 7 definierten Zusammensetzung zur Wachstumsregulierung von Reispflanzen, wobei die Reiskulturen gegenüber den in der Kombination enthaltenen Herbiziden, gegebenenfalls in Gegenwart von Safenem, tolerant sind.

9. Verwendung der nach Anspruch 7 definierten Zusammensetzung zur Beeinflussung des Ertrags oder der Inhaltsstoffe von toleranten Reispflanzen, wobei die Reiskulturen gegenüber den in der Kombination enthaltenen Herbiziden, gegebenenfalls in Gegenwart von Safenem, tolerant sind.

## Claims

1. The use of herbicide combinations for controlling harmful plants in rice crops, wherein the herbicide combination in question consists of a synergistically active content of

(A) a broad-spectrum herbicide

(A1) glufosinate-ammonium

and
(B) a herbicide from the group of the compounds which consists of

(B1) foliar-acting and soil-acting (residual action) herbicides which are effective selectively in rice against

monocotyledonous and dicotyledonous harmful plants, from the group consisting of molinate, clomazone, anilofos, oxadiazon, and
(B2) herbicides which are effective selectively in rice against dicotyledonous harmful plants and/or sedges from the group consisting of metsulfuronmethyl, pyrazosulfuronethyl, carfentrazoneethyl, benfuresate, and
(B3) foliar-acting herbicides which are effective selectively in rice against monocotyledonous harmful plants, from the group consisting of fenoxapropethyl, or
(B4) foliar- and soil-acting herbicides which are effective selectively in rice against monocotyledonous harmful plants clefoxidim, and the rice crops are tolerant to the herbicides (A) and (B) contained in the combination, optionally in the presence of safeners, and the herbicide combination optionally contains other active substances from the group consisting of safeners, fungicides, insecticides and plant growth regulators, and optionally additivies and formulation auxiliaries customary in crop protection.

**2.** The use of herbicide combinations for controlling harmful plants in rice crops, wherein the herbicide combination in question has a synergistically active content of

(A) a broad-spectrum herbicide from the group of the compounds which consists of

(A2) glyphosate and its alkali metal salts or salts with amines and sulfosate,

and
(B) a herbicide from the group of the compounds which consists of

(B1) foliar-acting and soil-acting herbicides which are effective selectively in rice against monocotyledonous and dicotyledonous harmful plants (residual action) from the group consisting of propanil, pendimethalin, bispyribac-Na, clomazone, oxadiargyl, oxadiazon, azimsulfuron, fluthiamide, mesotrione and
(B2) herbicides which are effective selectively in rice against dicotyledonous harmful plants and/or sedges from the group consisting of 2,4-D, MCPA, bensulfuron-methyl, metsulfuron, chlorsulfuron, carfentrazone, bentazone, chlorimuron and
(B3) foliar-acting herbicides which are effective selectively in rice against monocotyledonous harmful plants, from the group consisting of quizalofop-P, quizalofop, fenoxaprop-P, fenoxaprop, clodinafop and
(B4) foliar- and soil-acting herbicides which are effective selectively in rice against monocotyledonous harmful plants from the group consisting of sethoxydim, cycloxydim, clethodim,

and the rice crops are tolerant to the herbicides (A) and (B) contained in the combination, optionallyin the presence of safeners.

**3.** The use of herbicide combinations for controlling harmful plants in rice crops, wherein the herbicide combination in question has a synergistically active content of

(A) a broad-spectrum herbicide from the group of the compounds which consists of
(A3) compounds from the group consisting of imazethapyr, imazapyr, imazamethabenz, imazamethabenz-methyl, imazaquin, imazamox and imazapic and their salts
and
(B) a herbicide from the group of the compounds which consist of

(B1) foliar-acting and soil-acting (residual action) herbicides which are effective selectively in rice against monocotyledonous and dicotyledonous harmful plants, from the group consisting of propanil, pendimethalin, clomazone and mesotrione, and
(B3) foliar-acting herbicides which are effective selectively in rice against monocotyledonous harmful plants, from the group consisting of fenoxaprop-p, fenoxaprop and cyhalofop,

and the rice crops are tolerant to the herbicides (A) and (B) contained in the combination, optionallyin the presence of safeners.

**4.** The use as claimed in claim 2, wherein glyphosate-isopropylammonium is employed as active substance (A).

**5.** The use as claimed in any of claims 1 to 4, wherein the herbicide combination comprises adjuvants and formulation auxiliaries conventionally used in crop protection.

6. A method of controlling harmful plants in rice crops, which comprises applying herbicides of a herbicide combination, as defined in one or more of claims 1 to 3, jointly or separately, pre- emergence, post-emergence or pre- and post-emergence to the plants, parts of the plants, seeds of the plants or the area under cultivation, and wherein the rice crops are tolerant to the herbicides contained in the combination, optionally in the presence of safeners.

7. A herbicidal composition which consists of a combination of

(A) a broad-spectrum herbicide

(A1) glufosinate-ammonium,

and a herbicide (B) from the group of the compounds which consists of

(B1') foliar-acting and soil-acting herbicides which are effective selectively in rice against monocotyledonous and dicotyledonous harmful plants (residual action) from the group consisting of anilofos, oxadiazon,
(B2') herbicides which are effective selectively in rice against dicotyledonous harmful plants and/or sedges, from the group consisting of pyrazosulfuronethyl,
(B4') foliar- and soil-acting herbicide which is effective selectively in rice against monocotyledonous harmful plants clefoxidim,

and the herbicide combination optionally contains other active substances from the group consisting of safeners, fungicides, insecticides and plant growth regulators, and optionally additivies and formulation auxiliaries customary in crop protection.

8. The use of the composition defined in claim 7 for regulating the growth of tolerant rice plants, the rice crops being tolerant to the herbicides contained in the combination, optionallyin the presence of safeners.

9. The use of the composition defined in claim 7 for influencing the yield or the constituents of tolerant rice plants, the rice crops being tolerant to the herbicides contained in the combination, optionallyin the presence of safeners.

## Revendications

1. Utilisation de combinaisons d'herbicides pour lutter contre des plantes nuisibles dans les cultures de riz, **caractérisée en ce que** chaque combinaison d'herbicides présente une teneur active de manière synergique en :

(A) un herbicide à large spectre d'activité

(A1) du glufosinate-ammonium

et
(B) un herbicide choisi parmi le groupe des composés, qui consiste en :

(B1) des herbicides actifs contre les plantes nuisibles monocotylédones et dicotylédones, sélectifs du riz, avec action foliaire et action dans le sol (action résiduelle) du groupe des molinate, clomazone, anilofos, oxadiazone, et
(B2) des herbicides actifs contre les plantes nuisibles dicotylédones et/ou les laiches, sélectifs du riz, du groupe des metsulfuron-méthyle, pyrazosulfuron-éthyle, carfentrazone-éthyle, benfurésate, et
(B3) des herbicides actifs contre les plantes nuisibles monocotylédones, sélectifs du riz, avec action foliaire du groupe des fenoxaprop-éthyle, ou
(B4) des herbicides actifs contre les plantes nuisibles monocotylédones, sélectifs du riz, avec action foliaire et action dans le sol clefoxidim, et les cultures de riz sont tolérantes par rapport aux herbicides (A) et (B) contenus dans la combinaison, le cas échéant en présence de safeneurs, et la combinaison d'herbicides contient en option d'autres substances actives parmi le groupe des safeneurs, des fongicides, des insecticides et des régulateurs de croissance des végétaux, et en option des additifs et des auxiliaires de formulation usuels pour la protection des végétaux.

2. Utilisation de combinaisons d'herbicides pour lutter contre des plantes nuisibles dans les cultures de riz, **caractérisée**

**en ce que** chaque combinaison d'herbicide présente une teneur active de manière synergique en :

(A) un herbicide à large spectre d'activité choisi parmi le groupe des composés qui consiste en (A2) des glyphosates et leurs sels de métaux alcalins ou des sels avec des amines et des sulfosates,
et
(B) un herbicide choisi parmi le groupe des composés qui consiste en

(B1) des herbicides actifs contre les plantes nuisibles monocotylédones et dicotylédones, sélectifs du riz, avec action foliaire et action dans le sol (action rédisuelle) du groupe des propanil, pendiméthaline, bispyribac-Na, clomazone, oxadiargyl, oxadiazone, azimsulfuron, fluthiamide, mésotrione et
(B2) des herbicides actifs contre les plantes nuisibles dicotylédones et/ou les laiches, sélectifs du riz, du groupe des 2,4-D, MCPA, bensulfuron-méthyle, metsulfuron, chlorosulfuron, carfentrazone, bentazone, chlorimuron, et
(B3) des herbicides actifs contre les plantes nuisibles monocotylédones, sélectifs du riz, avec action foliaire, du groupe des quizalofop-P, quizalofop, fenoxaprop-P, fenoxaprop, clodinafop et
(B4) des herbicides actifs contre les plantes nuisibles monocotylédones, sélectifs du riz, avec action foliaire et action dans le sol, du groupe des séthoxydim, cyloxydim, cléthodim,

et les cultures de riz sont tolérantes par rapport aux herbicides (A) et (B) contenus dans la combinaison, le cas échéant en présence de safeneurs.

**3.** Utilisation de combinaisons d'herbicides pour lutter contre des plantes nuisibles dans les cultures de riz, **caractérisée en ce que** chaque combinaison d'herbicide présente une teneur active de manière synergique en :

(A) un herbicide à large spectre d'activité choisi parmi le groupe des composés qui consiste en
(A3) des composés du groupe imazethapyr, imazapyr, imazaméthabenz, imazaméthabenz-méthyle, imazaquin, imazamox et imazapic et leurs sels,
et
(B) un herbicide du groupe des composés qui se compose de

(B1) des herbicides actifs contre les plantes nuisibles monocotylédones et dicotylédones, sélectifs du riz, avec action foliaire et action dans le sol (action rédisuelle) du groupe des propanil, pendiméthaline, clomazone, mésotrione et
(B3) des herbicides actifs contre les plantes nuisibles monocotylédones, sélectifs du riz, avec action foliaire, du groupe des fenoxaprop-P, fenoxaprop,et cyhalofop,

et les cultures de riz sont tolérantes par rapport aux herbicides (A) et (B) contenus dans la combinaison, le cas échéant en présence de safeneurs.

**4.** Utilisation selon la revendication 2, **caractérisée en ce que** l'on utilise comme substance active (A) du glyphosate-isopropylammonium.

**5.** Utilisation selon l'une quelconque des revendications 1 à 4, **caractérisée en ce que** la combinaison d'herbicides contient les additifs et auxiliaires de formulation usuels de la protection des végétaux.

**6.** Procédé pour lutter contre les plantes nuisibles dans les cultures de riz, **caractérisé en ce que** l'on applique les herbicides d'une combinaison d'herbicides, définie selon l'une ou plusieurs des revendications 1 à 3, ensemble ou de manière séparée, en préémergence, postémergence ou en pré- et postémergence, sur les plantes, des parties de plantes, des graines de plantes ou sur la surface de culture et **en ce que** les cultures de riz sont tolérantes par rapport aux herbicides présents dans la combinaison, le cas échéant en présence de safeneurs.

**7.** Composition d'herbicide, **caractérisée en ce qu**'elle contient une combinaison de (A) un herbicide à large spectre d'activité

(A1) du glufosinate - ammonium

et un herbicide (B) choisi parmi le groupe des composés, qui consiste en

(B1') des herbicides actifs contre les plantes nuisibles monocotylédones et dicotylédones, sélectifs du riz, avec action foliaire et action dans le sol (action résiduelle) du groupe des anilofos, oxadiazone,
(B2') des herbicides actifs contre les plantes nuisibles dicotylédones et/ou les laiches, sélectifs du riz, du groupe des pyrazosulfuron-éthyle,
(B4') des herbicides actifs contre les plantes nuisibles monocotylédones, sélectifs du riz, avec action foliaire et action dans le sol clefoxidim, et la combinaison d'herbicides contient le cas échéant d'autres substances actives parmi le groupe des safeneurs, fongicides, insecticides et des régulateurs de croissance des végétaux, et en option des additifs et des auxiliaires de formulation usuels pour la protection des végétaux.

**8.** Utilisation de la composition définie selon la revendication 7, pour réguler la croissance des plants de riz, où les cultures de riz sont tolérantes vis à vis des herbicides présents dans la combinaison, le cas échéant en présence de safeneurs.

**9.** Utilisation de la composition définie selon la revendication 7, pour influencer le rendement ou les constituants des plants de riz tolérants, où les cultures de riz sont tolérantes vis à vis des herbicides présents dans la combinaison, le cas échéant en présence de safeneurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9809525 A
- US 4671819 A
- US 5183492 A
- EP 496701 A
- DE 2856260 A
- WO 9208353 A
- EP 0252237 A
- EP 0242246 A
- EP 242236 A
- EP 257542 A
- EP 275957 A
- EP 0513054 A
- WO 9200377 A
- EP 115673 A
- EP 409815 A
- EP 0360750 A
- US 5198599 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP Q476555 A
- EP 0048436 A
- EP 0336151 A
- US 4400196 A
- EP 0502014 A

### In der Beschreibung aufgeführte Nicht-Patentliteratur


- *Weed Technol.,* 1997, vol. 11, 662-666
- *Proc.South. Weed Sci.Soc., 48 Meeting,* 1995, 3
- The Pesticide Manual. British Crop Protection Council, 1997, 643-645
- *Zuckerrübe,* 1998, vol. 47, 217
- The Pesticide Manual. British Crop Protection Council, 1997, 646-649
- Zuckerrübe. 1998, vol. 47, 217
- The Pesticide Manual. British Crop Protection Council, 1997, 697-699
- *AG Chem New Compound Review,* 1999, vol. 17, 26
- *Weed Science Society of America (WSSA) in WSSA Abstracts,* 1999, vol. 39, 65-66
- **SAMBROOK et al.** Molecular Cloning, A Laboratory Manual. Cold Spring Harbor Laboratory Press, 1989
- **WINNACKER.** Gene und Klone. VCH Weinheim, 1996
- **CHRISTOU.** Trends in Plant Science. 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hauser Verlag, 1986, vol. 7
- **VAN VALKENBURG.** Pesticide Formulations. Marcel Dekker, 1973
- **K. MARTENS.** Spray Drying Handbook. G. Goodwin Ltd, 1979
- **WATKINS.** Handbook of Insecticide Dust Diluents and Carriers. Dartand Books
- **OLPHEN.** Introduction to Clay Colloid Chemistry. J. Wiley & Sons
- **MARSDEN.** Solvents Gulde. Interscience, 1950
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- *Factors Affecting Herbicidal Activity and Selectivity,* 1988, 227-232
- **S. R. COLBY.** *Weeds,* 1967, vol. 15, 20-22